# NEUE EUROPÄISCHE PATENTSCHRIFT

(11) **EP 1 542 545 B2**
(45) Veröffentlichungstag und Bekanntmachung des Hinweises auf die Entscheidung über den Einspruch: **13.04.2016**
(45) Hinweis auf die Patenterteilung: 07.12.2005
(21) Anmeldenummer: 03811343.7
(22) Anmeldetag: 17.09.2003
(51) Int. Cl.: A23K 20/10, A23K 50/10, A23K 50/30, A23K 10/00, A23K 10/30

(54) **FUTTERMITTELZUSATZ UND DIESEN ENTHALTENDES FUTTERMITTEL**
ANIMAL FOOD ADDITIVE AND ANIMAL FOOD CONTAINING SAID ADDITIVE
ADDITIFS ALIMENTAIRES ET ALIMENTS POUR ANIMAUX LES CONTENANT

(30) Priorität: 18.09.2002 DE 10243410
(43) Veröffentlichungstag der Anmeldung: 22.06.2005
(73) Patentinhaber: J. Rettenmaier & Söhne GmbH + Co. KG, 73494 Rosenberg (DE)
(72) Erfinder: SCHÜLE, Steffen, 74426 Bühlerzell (DE); BACKERS, Thomas, 73494 Rosenberg (DE)
(74) Vertreter: Grosse Schumacher Knauer von Hirschhausen
(86) Internationale Anmeldenummer: PCT/EP2003/010320
(87) Internationale Veröffentlichungsnummer: WO 2004/045304

(56) Entgegenhaltungen:
- EP-A- 0 819 787
- WO-A-02/39827
- US-A- 4 136 207
- PATENT ABSTRACTS OF JAPAN vol. 010, no. 296 (C-377), 8. Oktober 1986 (1986-10-08) -& JP 61 113601 A (AJINOMOTO CO INC;OTHERS: 01), 31. Mai 1986 (1986-05-31)
- H. KIKUCHI ET AL.: "Correlation between water-holding capacity of different types of cellulose in vitro and gastrointestinal retention time in vivo of rats" JOURNAL OF THE SCIENCE OF FOOD AND AGRICULTURE., Bd. 60, Nr. 2, 1992, Seiten 139-146, XP002267885 ELSEVIER APPLIED SCIENCE PUBLISHERS. BARKING., GB ISSN: 0022-5142
- PATENT ABSTRACTS OF JAPAN vol. 011, no. 115 (C-415), 10. April 1987 (1987-04-10) -& JP 61 260841 A (DAICEL CHEM IND LTD), 19. November 1986 (1986-11-19)

## Beschreibung

Die Erfindung hat ihren Ausgang von Problemen genommen, die sich bei der Fütterung von trächtigen Sauen stellen.

Die Haltung von trächtigen Sauen findet heute zum großen Teil aus arbeitswirtschaftlichen und Kostengründen in einstreulosen Systemen mit Einzeltierhaltung statt. Zukünftig werden sich aufgrund neuer Verordnungen tierartgerechtere Haltungsverfahren und Fütterungssysteme in der Schweinehaltung etablieren. Die Gruppenhaltung von trächtigen Sauen birgt fütterungstechnisch zahlreiche Herausforderungen.

Während der Gravidität muss die Energieaufnahme des Tieres begrenzt werden, um einen zu starken Fettansatz zu vermeiden. In der Vergangenheit wurde dies durch faserreiches und energiearmes Rau- und Saftfutter wie Gras, Rüben, Heu usw. sichergestellt. Der Einsatz dieser Futtermittel ist aber aufgrund der heutigen Haltungssysteme und der automatisierten Fütterungssysteme unter wirtschaftlichen Bedingungen kaum mehr praktikabel. Daher wird derzeit die Energieaufnahme des Tieres zum größten Teil über eine rationierte Futtervorlage begrenzt. Der Großteil der trächtigen Sauen wird daher in Kastenständen mit rationierter Fütterung gehalten. Dieses Haltungssystem ist nicht besonders tierartgerecht und zieht Verhaltensanomalien der Tiere nach sich.

Durch die Haltung der trächtigen Sauen in Kastenständen mit rationierter Futtergabe ist die Sättigung der Tiere weniger von Bedeutung. Es wird indessen erwartet, dass sich zu künftig vor allem die Sattfütterung und die Abruffütterung als Fütterungssysteme in der Praxis durchsetzen werden. Schon heute werden die Neubauten von Sauenhaltungssystemen entsprechend gestaltet, ohne dass die fütterungstechnischen Probleme - vor allem die Wahl eines geeigneten Rohfaserträgers - gelöst wären.

Vor diesem Hintergrund wurde im Jahr 2000 eine EU-Richtlinie (EU-Richtlinie 91/630 EWG über die Mindestanforderungen für den Schutz von Schweinen) zur Haltung von Schweinen verabschiedet, die bis 2006 umgesetzt werden muss. Nach dieser Richtlinie muss den Sauen zukünftig ständig Zugang zu Beschäftigungsmaterial verschafft werden, und die Tiere müssen sich in einem Stallbereich frei bewegen können. Als "Beschäftigungsmaterial" zählt vor allem der ständige Zugang zu Futter - eben die "Sattfütterung" oder "ad-libitum-Fütterung". Bei der Sattfütterung wird den Tieren das Futterad libitum in Futterautomaten vorgelegt. Hierbei muss es das Ziel sein, die Gewichtszunahme der Sau über den Energiegehalt der aufgenommenen Futterration zu begrenzen. Es gilt nämlich wie bei allen Fütterungssystemen weiterhin das Ziel, dass das trächtige Tier auf keinen Fall verfettet.

Um jedoch bei der selbstbestimmten Futterentnahme unerwünschten Fettansatz der Tiere (und damit verbundenen, schlechtere Geburtsleistungen) zu verhindern, muss die Energiekonzentration in der von dem Tier entnommenen Ration abgesenkt werden. Dies wird zur Zeit mit höheren Gaben an Rohfasern erzielt, welche möglichst wenig Energie in das Futter einbringen sollen.

Der Erfindung liegt die Aufgabe zugrunde, bei trächtigen Nutztieren und Einsatz von Fütterungssystemen wie der Sattfütterung eine schnelle Sättigung ohne negative Nebenwirkungen zu bewirken.

Diese Aufgabe wird durch den in Anspruch 1 wiedergegebenen Futtermittelzusatz bzw. das in Anspruch 4 wiedergegebene, den Futtermittelzusatz enthaltende Futtermittel gelöst.

Die Herstellung von Cellulosefibrillen und ihre Verwendung auch in Futtermitteln ist in der EP 0 819 787 A2 beschrieben, in Futtermitteln mit einem Zusatz an reiner feinteiliger Cellulose in der WO 02/39 827 A1. Die Wirkung der Erfindung beruht auf der hohen und raschen Quellfähigkeit fibrillierter Lignocellulose. Die Futteraufnahme lässt sich über die Quellung, d.h. über die Wasseraufnahmekapazität der Futterbestandteile und deren Quellgeschwindigkeit beeinflussen. Das Futter wird aufgenommen, quillt schon im Magen und sorgt bei den Tieren für ein Sättigungsgefühl, wodurch die Nährstoffaufnahme trotz des freien Zugangs zum Futter in Grenzen bleibt und das Tier nicht zu fett wird.

Um für die Erfindung besonders geeignet zu sein, sollte nach Anspruch 2, das Rohfaserkonzentrat ein Wasserrückhaltevermögen von 500-800% aufweisen, d.h. eine Wassermenge von 500-800% seines Eigengewichtes festhalten können.

Ein als Rohfaserkonzentrat mit dieser Eigenschaft in Betracht kommendes Material ist das Produkt "ARBOCEL" (eingetragene Marke der Firma Rettenmaier & Söhne GmbH + Co. KG) der Firma Rettenmaier & Söhne GmbH + Co. KG.
ARBOCEL Lignocellulose besitzt mit seinen 500-800% bei weitem das höchste Wasseraufnahmevermögen verglichen mit anderen am Markt befindlichen Rohfaserträgern (z.B. Weizenkleie ca. 200 %, Zuckerrübenschnitzel ca. 400 %)

Eine weitere wichtige Eigenschaft des erfindungsgemäßen Futtermittelzusatzes ist die hohe Quellgeschwindigkeit. Die Quellung muss jedenfalls zu einem wesentlichen Teil vollzogen sein, solange sich das Futtermittel noch im Magen befindet, weil nur dann das durch die Quellung bewirkte Sättigungsgefühl zur Wirkung kommt In der Regel ist die Quellung bereits nach ca. einer Minute abgeschlossen.

Der hohe Rohfasergehalt des Futtermittelzusatzes erlaubt es, den für die Erzielung der gewünschten Wirkung notwendigen Rohfasergehalt im Futtermittel durch Zugabe relativ geringer Mengen des Futtermittelzusatzes zu erreichen.

Wenn der Futtermittelzusatz nach Anspruch 3 kompaktiert ist, erleichtert sich seine Handhabung. Es entsteht bei der Zugabe kein Staub und es wird die gleichmäßige Einmischung in das Futtermittel erleichtert. Kompaktierung in diesen Zusammenhang soll eine Verdichtung feinteiligen Materials zu zusammenhängenden größeren Aggregaten bedeuten, z.B. eine Verdichtung in einem Walzenspalt zu einem Flächengebilde, welches anschließend in kleine Stücke gebrochen wird.

Die Erfindung verwirklicht sich auch in dem mit dem Futtermittelzusatz versehenen Futtermittel nach Anspruch 4.

Dabei können die Anteile des Futtermittelzusatzes am Gesamtgewicht des Futtermittels gemäß Anspruch 5 0,5 - 8,0 % betragen. Meist reichen aber Mengen im Bereich von 1,0 - 3,0 Gewichtsprozent aus.

Es kann vorteilhaft sein, auch das mit dem Futtermittelzusatz versehene Futtermittel zu pelletieren (Anspruch 6).

Ein wichtiger Faktor bei Futtermitteln der in Rede stehenden Art ist der Gehalt an unerwünschten Stoffen in den Rohfaserträgern. So enthalten herkömmliche Rohfaserträger, wie z.B. Weizenkleie, Strohmehle, Grünmehle usw., häufig unerwünschte Stoffe wie Mykotoxine und hohe Keimbelastungen. Des weiteren sind in herkömmlichen Rohfaserträgern höhere Gehalte an fermentierbaren, löslichen Faserstoffen enthalten.

Die erfindungsgemäß einzusetzende Lignocellulose ist dagegen frei von Mykotoxinen, weist eine sehr niedrige Keimbelastung auf und enthält größtenteils unlösliche Rohfasern. Lösliche Faserstoffe binden Nährstoffe und reduzieren deren Verfügbarkeit. Dies birgt wiederum zwei Nachteile: Die Verfügbarkeit vor allem der Mikroingredienz (Mineralstoffe, Spurenelemente, Vitamine) ist schwer verlässlich zu kalkulieren und die nötige höhere Zugabe dieser Stoffe obendrein recht kostspielig.

Der Vorteil von unlöslichen Faserstoffen gegenüber löslichen besteht hier vor allem im lang anhaltenden Sättigungsgefühl, weil eben keine Anteile der Rohfasern herausgelöst werden und diese in ihrer Wirkung erhalten bleiben. Auch werden keine Nährstoffe, wie Mineralstoffe, gebunden.

Weiter werden lösliche Faserstoffe im Verdauungstrakt stark fermentiert und führen somit zu weiteren Problemen wie Gasbildung und negativ beeinflusster Kotkonsistenz.

Weiterhin enthalten herkömmliche Rohfaserträger (hier vor allem Zuckerrübenschnitzel) sehr unvorteilhafte Verhältnisse von Calcium und Magnesium, was die tierischen Leistungen der Sauen stark reduziert. Die erfindungsgemäß einzusetzende Lignocellulose beeinflusst das Ca-Mg-Gleichgewicht nicht.

Die Kotkonsistenz ist sowohl in der Zuchtsauenhaltung als auch bei Mastschweinen und anderen Nutztieren (Kälber) ein sehr wichtiger Parameter. Aufgrund des hohen Quellvermögens ist die fibrillierte Lignocellulose in der Lage, überschüssige, ungebundene oder nicht eingedickte Flüssigkeit im Darm zu binden und somit Durchfall abzupuffern. Auf der anderen Seite enthält die Lignocellulose fast ausschließlich unlösliche Bestandteile. Es kommt zu keiner Gelbildung und es wird dem typischen schmierigen Kot - wie er etwa bei höheren Dosierungen von Zuckerrübenschnitzeln beobachtet wird - zuverlässig vorgebeugt.

Die Kotkonsistenz ist auch wesentlich in bezug auf die Hygiene im Stall. Kommt es aufgrund von hohen Gehalten an fermentierbaren, löslichen Fasern zum typischen schmierigen Kot (vor allem bei Rübenschnitzeln), so tritt sich der Kot nicht ohne weiteres durch die Spaltenböden der Ställe hindurch, sondern baut sich auf deren Oberfläche auf. Dies birgt aus zwei Gründen erhebliche Risiken: Zum einen können die Sauen bzw. Mastschweine auf den rutschigen Böden ausrutschen und Knochenbrüche erleiden, zum anderen führt dies in den Abteilen nach dem Abferkeln zu erheblichen Kolibelastungen bei den Ferkel, da die jungen Ferkel den Kot im Spiel aufnehmen.

Weiterhin ist es von elementarer Bedeutung, kurz vor dem Abferkeln Konstipation (Verstopfung) vorzubeugen. Der Darm der Sau soll sich vor der Geburt der Ferkel natürlich entleeren, um eine schnellere und einfachere Geburt zu ermöglichen. Durch die Zugabe von fibrillierter Lignocellulose als unlöslicher Rohfaser wird eine Beschleunigung der intestinalen Transitzeit und eine damit verbundenen bessere Darmentleerung erzielt.

Die hohe Wasseraufnahmekapazität der erfindungsgemäß einzusetzenden Lignocellulose entsteht durch die Fibrillierung, d.h. durch das spezielle Herstellungsverfahren dieser Lignocellulose, insbesondere bei dem Produkt ARBOCEL. Hierbei wird das Material durch eine mühlenartige Einrichtung bearbeitet, so daß die einzelnen Fasern weitgehend voneinander gelöst oder getrennt werden und eine besonders lockere, kapillarintensive saugfähige Struktur entsteht.

Durch das starke Aufquellen des Futtermittels im Magen erreicht das Tier sehr schnell ein lang anhaltendes Sättigungsgefühl und stellt dann die weitere Futteraufnahme aufgrund dieses Sättigungsgefühls ein. Dadurch wird ein übermäßiger Futterverbrauch in der Sattfütterung stark begrenzt und es werden Futterkosten eingespart. Dieser Effekt tritt auch bei anderen Tierarten als Schweinen ein. Die Erfindung ist daher nicht auf Schweine begrenzt, obwohl sie davon ihren Ausgang genommen hat.

Die bereits erwähnte Freiheit derfibrillierten Lignocellulose von Mykotoxinen stellt gerade in der Fütterung von Mutterschweinen einen entscheidenden Vorteil dar. Es ist bekannt, dass von vielen herkömmlichen Rohfaserträgern, wie z.B. Strohmehle, Kleien usw., große Risiken in bezug auf Mykotoxine ausgehen. Vor allem Fusarientoxine (Zeralenon, DON) stellen große Gefahren für das Fruchtbarkeitsgeschehen und die Wurfleistung von Schweinen dar.

Bei der Sattfütterung von trächtigen Mutterschweinen ist es außerdem notwendig, dass der Energiegehalt im Futtermittel auf 8,0 - 8,5 MJME (MegaJoule Metabolisierbare Energie) pro kg Futtermittel reduziert wird. Diese Reduktion des Energiegehalts bei gleichzeitiger ausreichender Versorgung mit Proteinen und Mineralstoffen ist mit herkömmlichen Rohfaserträgern nur sehr schwierig zu bewältigen, da sie auch immer gewisse Energiekonzentrationen in das Futtermittel einbringen. Es ist bei den herkömmlichen Rohfaserprodukten daher eine sehr hohe Konzentration notwendig, um den Energiegehalt der Ration entsprechend zu verringern. Diese hohen Gehalte an wenig schmackhaften Produkten in der Ration führen zu einer Selektion der Futterbestandteile durch das Tier, d.h. es kann vorkommen, dass die Rohfaserträger gar nicht in ausreichender Menge gefressen werden.

Durch den sehr hohen Rohfasergehalt der erfindungsgemäß einzusetzenden Lignocellulose (z.B. 65 % nach Weender Analyse) ist diese als Futtermittelzusatz im Sinne der Erfindung bestens geeignet, da durch sie praktisch keine Energie in das Futtermittel eingebracht wird. So ist es bereits möglich, mit relativ geringen Einsatzmengen den Rohfasergehalt des Futtermittels merklich zu steigern und damit die Energiekonzentration im Futtermittel deutlich zu verringern.

Die erfindungsgemäß einzusetzende fibrillierte Lignocellulose ist aber nicht nur für die Sattfütterung von trächtigen Schweinen, sondern auch für die rationierte Fütterung von Sauen geeignet. Bei der rationierten Fütterung werden ca. 6 % Rohfaser in der Gesamtration angestrebt. Getreidebetonte Rationen (Gerste), wie sie üblicherweise eingesetzt werden, enthalten ca. 4 % Rohfaser. Durch den Zusatz von ca. 3 % fibrillierter Lignocellulose werden diese Rationen auf ca. 6 % pro Faser aufgewertet. Von den herkömmlichen Rohfaserträgern (Kleie, Zuckerrübenschnitzel, Grünmehl, Heumehl, Sojaschalen usw.) sind ca. 15 - 20 % Einsatzmenge notwendig, um die Rationen auf die angestrebten 6 % Rohfaser aufzuwerten. Die fibrillierte Lignocellulose ermöglicht es also, bereits mit niedrigen Einsatzmengen den Rohfasergehalt in Futtermittelrationen zu steigern.

Durch die ganzjährige Verfügbarkeit der fibrillierten Lignocellulose in konstanter Qualität kommt es weder zu hygienischen, mikrobiologischen noch logistischen Problemen, wie das bei den erntebedingt verfügbaren sonstigen Rohfaserträgern der Fall ist. Diese müssen überdies noch konserviert und eingelagert werden.

Einen weiteren positiven Aspekt für den Einsatz von fibrillierter Lignocellulose stellt die Möglichkeit der Behandlung von nicht infektiös bedingten Durchfallerkrankungen bei den meisten Tierarten (hauptsächlich Kälber, Schweine) dar. Hier wird durch das sehr hohe Wasserbindevermögen auf physikalischem Wege eine Stabilisierung des Wasserhaushaltes im Darm und eine Verbesserung der Kotkonsistenz erreicht.

Praxiserfahrungen zeigen, dass in Fütterungsversuchen mit der Zugabe von nur 1,2 % fibrillierter Lignocellulose ganze 15 % mykotoxinhaltiger Weizenkleie ersetzt werden könnten. Zur Kompensation der frei gewordenen Menge in der Rezeptur wurde hofeigene Gerste zugesetzt. So blieb die Formulation im Rohfasergehalt im Wesentlichen konstant und es konnte eine leichte Kostenreduktion erzielt werden.

Durch die Zugabe von ARBOCEL Lignocellulose wurde weiterhin bei trächtigen Sauen eine höhere Wasseraufnahme beobachtet. Die Sauen werden dadurch besser gespült, der Urin-pH-Wert wird positiv beeinflusst und es werden in der Praxis deutlich weniger MMA (Matitis, Metritis, Agalaktie, Gesäuge- und Uterusentzündungen, welche zu Milchmangel führt) beobachtet.

Es handelt sich bei der Quellung und dem fasereigenen Kapillareffekt der Lignocellulose um rein physikalische Effekte, welche keine einer Tierart spezifische Verdauungsvorgänge voraussetzt. Somit ist die geschilderte Wirkungsweise der Lignocellulose (Behandlung und Vorbeugung von Durchfallerkrankungen, Beeinflussung der Kotkonsistenz, Sättigungseffekt usw.) auch auf andere Tierarten und sogar auf die menschliche Ernährung übertragbar.

Um dies zu prüfen, wurden Fütterungsversuche bei Pelztieren durchgeführt. Füchse und Nerze wurden in den entsprechenden Farmen mit pastösem Futter gefüttert, welches zum Großteil aus Schlachtnebenerzeugnissen besteht und in der Regel sehr energiereich ist. Da die Elterntiere während der Intensivmast sehr viel Energie aufnehmen, neigen sie zum verfetten. Da dies zu schlechten Geburtsleistungen führt, muss im Spätjahr sehr energiearmes Futter verabreicht werden. Ebenfalls muss die Energie während der Laktation kontrolliert werden. Hierzu wurden dem Futter der Pelztiere 2 % ARBOCEL beigemischt. Dadurch konnte eine bessere Sättigung der Tiere sowie eine höhere Wasseraufnahme beobachtet werden, also die gleiche Resultate wie auch im Bereich der Zuchtsauenfütterung.

Schließlich wurden auch Fütterungsversuche bei Mastschweinen durchgeführt. Diese neigen in späteren Fütterungsstadien ebenfalls zu Verfettung, was sich negativ auf den Muskelfleischanteil und somit auf den wirtschaftlichen Erfolg der Mast auswirkt. Mit nur 1 % ARBOCEL konnte hier die gewünschte Reduktion der Energieaufnahme bei der Fütterung erzielt werden.

Alle vorstehenden %-Angaben sind Gewichtsprozente.

## Patentansprüche

1. Futtermittelzusatz für in der Gravidität, Laktation, Mast oder Aufzucht befindliche Nutztiere mit einem Anteil an fibrillierten cellulosehaltigen Fasern, **dadurch gekennzeichnet, dass** er ein Rohfaserkonzentrat von auffibrillierter Lignocellulose enthält, wobei das Rohfaserkonzentrat einen Rohfasergehalt einen Rohfasergehalt (nach Weender Analyse) von über 60% besitzt.

2. Futtermittelzusatz nach Anspruch 1, **dadurch gekennzeichnet, dass** das Rohfaserkonzentrat ein Wasserrückhaltevermögen von über 700 % oder von etwa 500-800% und eine so hohe Quellgeschwindigkeit besitzt, dass die Quellung zu einem wesentlichen Teil vollzogen ist, solange sich das ohne Futtermittelzusatz enthaltende Futtermittel noch im Magen befindet.

3. Futlermittelzusatz nach Anspruch 1 oder 2, **dadurch gekennzeichnet, dass** er kompaktiert ist.

4. Futtermittel für in der Gravidität, Laktation, Mast oder Aufzucht befindliche Nutztiere, welches einen Zusatz an fibrillierten cellulosehaltigen Fasern enthält, **dadurch gekennzeichnet, dass** es einen Futtermittelzusatz nach einem der Ansprüche 1 bis 3 enthält.

5. Futtermittel nach Anspruch 4, **dadurch gekennzeichnet, dass** der Zusatz in einer Menge von 0,5 - 8,0 % des Futtermittels in diesem zugegen ist.

6. Futtermittel nach Anspruch 4 oder 5, **dadurch gekennzeichnet, dass** es pelletiert ist.

## Claims

1. Feed additive for farm animals in a state of pregnancy, lactation, feeding or weaning with an amount of fibrillated, cellulose fibre, **characterized in that** it contains a raw fibre concentrate of fibrillated lignocellulose, the raw fibre concentrate possesses a raw fibre content (Weender analysis) of over 60%.

2. Feed additive according to Claim 1, **characterized in that** the raw fibre concentrate possesses a water retention capacity of over 700% or approximately 500-800% and such a fast swelling speed that the swelling to a substantial extent is complete whilst the animal feed not containing feed additive is still in the stomach.

3. Feed additive according to Claim 1 or 2, **characterized in that** it is compacted.

4. Feed for farm animals in a state of pregnancy, lactation, feeding or weaning, which contains an additional amount of fibrillated cellulose fibre, **characterized in that** it contains a feed additive according to any one of Claims 1 to 3.

5. Animal feed according to Claim 4, **characterized in that** the additive is present in the latter in a percentage amount of between 0.5 and 8.0% of the animal feed.

6. Animal feed according to Claim 4 or 5, **characterized in that** it is pelletised.

## Revendications

1. Additif pour aliments du bétail, destiné à des animaux de rapport en période de gravidité, de lactation, d'engraissement ou d'élevage, comprenant une proportion de fibres contenant de la cellulose fibrillée, **caractérisé en ce qu'**il contient un concentré de fibres brutes à base de lignocellulose fibrillée le concentré de fibres brutes a une teneur en fibres brutes (déterminée par une analyse Weender) supérieure à 60%.

2. Additif pour aliments du bétail selon la revendication 1, **caractérisé en ce que** le concentré de fibres brutes a un pouvoir de rétention d'eau supérieur à 700% ou allant de 500 à 800% environ, et une vitesse de gonflement suffisamment grande pour que le gonflement ait lieu à un degré substantiel tant que l'aliment contenant l'additif pour aliments du bétail se trouve encore dans l'estomac.

3. Additif pour aliments du bétail selon la revendication 1 ou la revendication 2, **caractérisé en ce qu'**il est compacté.

4. Aliment du béteil destiné à des animaux de rapport en période de gravidité, de lactation, d'engraissement ou d'élevage, qui contient un ajout de fibres contenant de la cellulose fibrillée, **caractérisé en ce qu'**il contient un additif pour aliments du bétail selon l'une des revendications 1 à 3.

5. Aliment du bétail selon la revendication 4, **caractérisé en ce que** l'ajout à l'aliment du bétail se fait en une quantité de 0,5 à 8,0% ramenée audit aliment.

6. Aliment du bétail selon la revendication 4 ou la revendication 5, **caractérisé en ce qu'**il se présente sous forme de pellets.
